# EUROPEAN PATENT APPLICATION

(11) **EP 4 647 402 A1**
(43) Date of publication of application: **12.11.2025**
(21) Application number: 25169301.6
(22) Date of filing: 08.04.2025
(51) Int. Cl.: C01G 53/05, C01G 53/42, H01M 4/131, H01M 4/525, H01M 10/0525, H01M 4/02

(54) **POSITIVE ELECTRODE ACTIVE MATERIAL FOR RECHARGEABLE LITHIUM BATTERY AND PREPARATION METHOD THEREOF**

(30) Priority: 30.04.2024 KR 20240057637
(71) Applicant: Samsung SDI Co., Ltd., Yongin-si, Gyeonggi-do 17084 (KR)
(72) Inventor: CHOI, Seungyeon, 17084 Yongin-si (KR); HA, Jeuk, 17084 Yongin-si (KR); SHIN, Dongwook, 17084 Yongin-si (KR); HONG, Soonkie, 17084 Yongin-si (KR); KIM, Minhan, 17084 Yongin-si (KR); KIM, Soohyeon, 17084 Yongin-si (KR); LEE, Soonrewl, 17084 Yongin-si (KR); CHA, Minah, 17084 Yongin-si (KR)
(74) Representative: Marks & Clerk LLP

(57) **Abstract**

A positive electrode active material includes a lithium composite oxide, and a coating layer on a surface of the lithium composite oxide, and may further include some sodium (Na) and sulfur (S), wherein a mass fraction (S/Na) of the S to the Na is in a range of about 1 to about 3. Also disclosed are methods of preparing the same, a positive electrode including the same, and a rechargeable lithium battery including the positive electrode.

## Description

### BACKGROUND

### 1. Field

The present invention relates to a positive electrode active material for a rechargeable lithium battery, methods of preparing the positive electrode active material, a positive electrode including the positive electrode active material, and a rechargeable lithium battery including the positive electrode.

### 2. Description of the Related Art

Recently, the rapid spread and popularization of battery-powered and/or battery-using electronic devices, such as mobile phones, laptop computers, and/or the like, and/or electric vehicles, have driven a significantly increased demand for rechargeable batteries with relatively high energy density and high capacity. Accordingly, extensive research has been undertaken (conducted) to enhance (improve) performance of rechargeable lithium batteries, e.g., as driving power sources for hybrid and/or electric vehicles, and/or as power storage power sources, e.g., for resident power storage solutions (e.g., power walls and/or electrical energy storage systems).

A rechargeable lithium battery includes a positive electrode, a negative electrode, and an electrolyte solution. The positive electrode and the negative electrode each include an active material configured for (e.g., capable of) intercalating and deintercalating lithium ions. The battery generates electrical energy through oxidation and reduction (i.e., redox) reactions that occur when the lithium ions are intercalated and/or deintercalated into/from the positive electrode and the negative electrode during the charging and discharge processes.

### SUMMARY

In one aspect, the present invention is directed toward a positive electrode active material for a rechargeable lithium battery, which exhibits (has) excellent or suitable lifetime characteristics.

In another aspect, the present invention is directed toward methods of preparing the positive electrode active material.

Additional aspects will be set forth in part in the description which follows and, in part, will be apparent from the description, or may be learned by practice of the presented embodiments of the disclosure.

According to a first aspect of the present invention there is provided a first method of preparing a positive electrode active material including preparing a lithium composite oxide represented by Chemical Formula 1; wet coating the lithium composite oxide (e.g., to provide a coated lithium composite oxide); and cleaning the coated lithium composite oxide using a washing water (e.g., to provide a cleaned lithium composite oxide). An amount of the washing water is (e.g., in a range of) at most (e.g., about 0 wt% to) about 15 wt% based on a total weight of the coated lithium composite oxide.

Chemical Formula 1 Liₐ₁Niₓ₁M¹_{y1}M²_{z1}O_{2-b1}X_{b1}

In Chemical Formula 1, 0.9≤a1≤1.8, 0.7≤x1≤1, 0≤y1≤0.3, 0≤z1≤0.3, 0.9≤x1+y1+z1≤1.1, 0≤b1≤0.1, M¹ and M² each independently include at least one element selected from the group consisting of aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), strontium (Sr), titanium (Ti), vanadium (V), tungsten (W), and zirconium (Zr), and X includes at least one element selected from the group consisting of fluorine (F), phosphorus (P), and sulfur (S).

According to a second aspect of the present invention there is provided a second method of preparing a positive electrode active material including preparing a lithium composite oxide represented by Chemical Formula 1 above; wet coating the lithium composite oxide (e.g., to provide a coated lithium composite oxide); and cleaning the coated lithium composite oxide using a washing water. The positive electrode active material includes sodium (Na) and sulfur (S), wherein a mass fraction (S/Na) of the sulfur (S) to the sodium (Na) is in a range of about 1 to about 3.

According to a third aspect of the present invention there is provided, a positive electrode active material including a lithium composite oxide represented by Chemical Formula 1 above; and a coating layer on a surface of the lithium composite oxide. The positive electrode active material includes sodium (Na) and sulfur (S), wherein a mass fraction (S/Na) of the sulfur (S) to the sodium (Na) is in a range of about 1 to about 3.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:
FIG. 1 is a simplified conceptual view illustrating a rechargeable lithium battery according to one or more embodiments of the present invention.
FIGS. 2-5 are schematic views illustrating a rechargeable lithium battery according to one or more embodiments.
FIGS. 6-8 are schematic views illustrating coating and washing processes (e.g., steps, tasks, acts, etc.) for preparing a lithium composite oxide according to one or more embodiments of the present invention.

### DETAILED DESCRIPTION

In order to sufficiently understand the configurations and aspects of the present disclosure, one or more embodiments of the invention will be described with reference to the accompanying drawings. It should be noted, however, that the disclosure is not limited to the following example embodiments, and may be implemented in one or more suitable forms. Rather, the example embodiments are provided only to illustrate the present disclosure and let those skilled in the art fully know the scope of the disclosure.

In the present disclosure, it will be understood that, if (e.g., when) an element is referred to as being on another element, the element may be directly on the other element or intervening elements may be present therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the present disclosure, and duplicative descriptions thereof may not be provided for conciseness.

Unless otherwise specially noted in the present disclosure, the singular forms "a," "an," and "the" are intended to include the plural forms as well, unless the context clearly indicates otherwise. Further, the utilization of "may" when describing embodiments of the present disclosure refers to "one or more embodiments of the present disclosure". In addition, unless otherwise specially noted, the phrase "A or B" or "A and/or B" or "A/B" may indicate "A but not B", "B but not A", and "A and B". The terms "comprise(s)/include(s)" and/or "comprising/including" used in the present disclosure do not exclude the presence or addition of one or more other components.

As used herein, the term "combination thereof" may refer to a mixture, a stack, a composite, a copolymer, an alloy, a blend, or a reaction product of the constituents.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical or electrical properties of the semiconductor film.

As used herein, the terms "use," "using," and "used" may be considered synonymous with the terms "utilize," "utilizing," and "utilized," respectively.

Unless otherwise specially defined in present disclosure, a particle diameter/size may be an average particle diameter/size. ID₅₀ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter/size (D₅₀) may be measured by a method widely suitable to those skilled in the art, for example, by a particle size analyzer, for example, HORIBA, LA-950 laser particle size analyzer, or by using a transmission electron microscope (TEM) image or a scanning electron microscope (SEM) image. In one or more embodiments, the average particle diameter/size may be measured by a measurement device using dynamic light-scattering, wherein data analysis is conducted to count the number of particles for each particle size range, and an average particle diameter/size (D₅₀) value may then be obtained through calculation. Also, a laser scattering method may be utilized to measure the average particle diameter/size. In the laser scattering method, target particles are dispersed in a dispersion medium, then, introduced into a commercial laser diffraction particle-diameter measurement instrument (e.g., MT3000 of Microtrac), and irradiated to ultrasonic waves of about 28 kHz at an output of about 60 W, and the average particle diameter/size (D₅₀) based on about 50% of particle diameter distribution may be calculated in the measurement instrument. In the present disclosure, when particles are spherical, "diameter" indicates an average particle diameter, and when the particles are non-spherical, the "diameter" indicates a major axis length.

The term "silicon particle" as used herein may be defined as having either a single particle form or a secondary particle form. The single particle form refers to an individual particle without a grain boundary or interface. This can include a single crystal, a polycrystalline material containing several crystals, a monolithic structure, a single unitary structure, or a non-aggregated particle. The presence of a grain boundary in the polycrystalline materials does not necessarily preclude them from being in a single particle form. Conversely, the secondary particle form includes an aggregated structure where at least two primary particles are combined, forming a spherical or oval shape. This form may have a grain boundary or interface coating layer that enhances structural stability and electric conductivity. In summary, the silicon particle may either be a single particle form, characterized by its non-aggregated structure and small size, or a secondary particle form, characterized by the aggregation of primary particles and the presence of a grain boundary or interface coating layer.

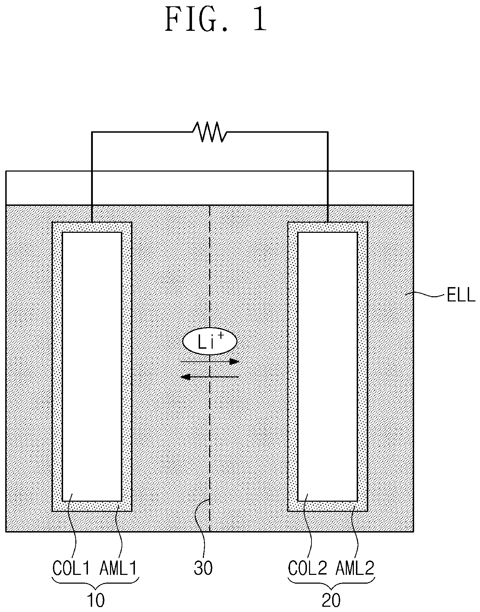

FIG. 1 illustrates a simplified conceptual diagram of a rechargeable lithium battery according to one or more embodiments of the present disclosure. Referring to FIG. 1, a rechargeable lithium battery may include a positive electrode 10, a negative electrode 20, a separator 30, and an electrolyte (e.g., an electrolyte solution) ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20 and the separator 30 may be in contact with the electrolyte solution ELL. For example, the positive electrode 10, the negative electrode 20, and the separator 30 may be immersed in (e.g., impregnated with) the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and further include a binder and/or a conductive material (e.g., an electrically conductive material).

For example, the positive electrode 10 may further include an additive that can serve as a sacrificial positive electrode.

An amount of the positive electrode active material may be in a range from about 90 wt% to about 99.5 wt% based on 100 wt% of the positive electrode active material layer AML1. Amounts of the binder and the conductive material may be about 0.5 wt% and about 5 wt%, respectively, based on 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

The conductive material may be used to provide an electrode with conductivity (e.g., electrical conductivity), and any suitable conductive material (e.g., electrically conductive material) without causing chemical change of a battery (e.g., without causing an undesirable chemical change in the rechargeable lithium battery) may be used as the conductive material. The conductive material may include, for example, a carbon-based material such as natural graphite, artificial graphite, carbon black, acetylene black, Ketjen black, carbon fiber, carbon nano-fiber, and/or carbon nano-tube; a metal powder and/or metal fiber containing one or more of copper, nickel, aluminium, and silver; a conductive polymer (e.g., an electrically conductive polymer) such as a polyphenylene derivative; or a mixture thereof.

Al may be used as the current collector COL1, but the present disclosure is not limited thereto.

### Positive Electrode Active Material

The positive electrode active material in the positive electrode active material layer AML1 includes a compound (e.g., a lithiated intercalation compound) that is capable of reversible intercalation and de-intercalation of lithium. The positive electrode active material includes at least one composite oxide of lithium and nickel and may further include a metal that is selected from cobalt and/or manganese.

The composite oxide includes a lithium transition metal composite oxide, that is a lithium-nickel-based oxide, which may also contain cobalt and/or manganese. For example, the lithium-nickel-based oxide may be a cobalt-free lithium-nickel-manganese-based oxide.

The positive electrode active material may include a compound expressed by one of chemical formulae selected from among LiₐA_{1-b}X_{b}O_{2-c}D_{c} (0.90≤a≤1.8, 0≤b≤0.5, 0≤c≤0.05), LiₐMn_{2-b}X_{b}O_{4-c}D_{c} (0.90≤a≤1.8, 0≤b≤0.5, 0≤c≤0.05), LiₐNi_{1-b-c}Co_{b}X_{c}O_{2-α}D_{α} (0.90≤a≤1.8, 0≤b≤0.5, 0≤c≤0.5, 0<α<2), LiₐNi_{1-b-c}Mn_{b}X_{c}O_{2-α}D_{α} (0.90≤a≤1.8, 0≤b≤0.5, 0≤c≤0.5, 0<α<2), LiₐNi_{b}Co_{c}L¹_{d}GₑO₂ (0.90≤a≤1.8, 0≤b≤0.9, 0≤c≤0.5, 0≤d≤0.5, 0≤e≤0.1), LiₐNiG_{b}O₂ (0.90≤a≤1.8, 0.001≤b≤0.1), LiₐCoG_{b}O₂ (0.90≤a≤1.8, 0.001≤b≤0.1), LiₐMn_{1-b}G_{b}O₂ (0.90≤a≤1.8, 0.001≤b≤0.1), LiₐMn₂G_{b}O₄ (0.90≤a≤1.8, 0.001≤b≤0.1), LiₐMn_{1-g}G_{g}PO₄ (0.90≤a≤1.8, 0≤g≤0.5), Li_{(3-f)}Fe₂(PO₄)₃ (0≤f≤2), and LiₐFePO₄ (0.90≤a≤1.8).

In the chemical formulae above, A may be Ni, Co, Mn, and/or a (e.g., any suitable) combination thereof; X may be Al, Ni, Co, Mn, Cr, Fe, Mg, Sr, V, a rare element, and/or a (e.g., any suitable) combination thereof; D may be O, F, S, P, and/or a combination thereof; G may be Al, Cr, Mn, Fe, Mg, La, Ce, Sr, V, or a (e.g., any suitable) combination thereof; and L¹ may be Mn, Al, and/or a (e.g., any suitable) combination thereof.

For example, the positive electrode active material may be a high-nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of metal excluding lithium in the lithium transition metal composite oxide. The high-nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include a negative electrode active material in an amount of about 90 wt% to about 99 wt%, a binder in an amount of about 0.5 wt% to about 5 wt%, and a conductive material (e.g., an electrically conductive material) in an amount of about 0 wt% to about 5 wt%.

The binder may serve to improve attachment of negative electrode active material particles to each other and also to improve attachment of the positive electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, ethylene-propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include styrene-butadiene rubber, (meth)acrylated styrene-butadiene rubber, (meth)acrylic rubber, butyl rubber, fluoro rubber, polyethylene oxide, polyvinylpyrrolidone, polyepichlorohydrin, polyphosphazene, poly(meth)acrylonitrile, ethylene-propylene-diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

If an aqueous binder is used as the negative electrode binder, a cellulose-based compound capable of providing or increasing viscosity may further be included. The cellulose-based compound may include one or more of carboxymethyl cellulose, hydroxypropylmethyl cellulose, methyl cellulose, and alkali metal salts thereof. The alkaline metal may include Na, K, and/or Li.

The dry binder may include a fibrillizable polymer material, for example, polytetrafluoroethylene, polyvinylidene fluoride, polyvinylidene fluoride-hexafluoropropylene copolymer, polyethylene oxide, and/or a (e.g., any suitable) combination thereof.

The conductive material may be used to provide an electrode with conductivity (e.g., electrical conductivity), and any suitable conductive material (e.g., electrically conductive material) without causing chemical change of a battery (e.g., without causing an undesirable chemical change in the rechargeable lithium battery) may be used as the conductive material. For example, the conductive material may include a carbon-based material such as natural graphite, artificial graphite, carbon black, acetylene black, Ketjen black, carbon fiber, carbon nano-fiber, and carbon nano-tube; a metal powder and/or metal fiber including one or more of copper, nickel, aluminium, and silver; a conductive polymer (e.g., an electrically conductive polymer) such as a polyphenylene derivative; and/or a (e.g., any suitable) mixture thereof.

The current collector COL2 may include a copper foil, a nickel foil, a stainless steel foil, a titanium foil, a nickel foam, a copper foam, a polymer substrate coated with a conductive metal (e.g., an electrically conductive metal), and/or a (e.g., any suitable) combination thereof.

### Negative Electrode Active Material

The negative electrode active material in the negative electrode active material layer AML2 may include a material can reversibly intercalate and de-intercalate lithium ions, lithium metal, a lithium metal alloy, a material that can dope and de-dope lithium, and/or a transition metal oxide.

The material that can reversibly intercalate and de-intercalate lithium ions may include a carbon-based negative electrode active material, for example, crystalline carbon, amorphous carbon, and/or a (e.g., any suitable) combination thereof. For example, the crystalline carbon may include graphite such as non-shaped, sheet-shaped, flake-shaped, sphere-shaped, and/or fiber-shaped natural or artificial graphite, and the amorphous carbon may include soft carbon, hard carbon, mesophase pitch carbon, and/or calcined coke.

The lithium metal alloy may include an alloy of lithium and metal that is selected from among Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material and/or a Sn-based negative electrode active material. The Si-based negative electrode active material may include silicon, silicon-carbon composite, SiOₓ (0<x ≤ 2), Si-Q alloy (where Q is alkali metal, alkaline earth metal, element of Group 13, element of Group 14 (except for Si), element of Group 15, element of Group 16, transition metal, rare-earth element, and/or a (e.g., any suitable) combination thereof), and/or a (e.g., any suitable) combination thereof. The Sn-based negative electrode active material may include Sn, SnO₂, SnOₓ (0<x ≤ 2), a Sn-based alloy, and/or a (e.g., any suitable) combination thereof.

The silicon-carbon composite may be a composite of silicon and amorphous carbon. According to one or more embodiments, the silicon-carbon composite may be in the form of silicon particles and amorphous carbon coated on surfaces of the silicon particles. For example, the silicon-carbon composite may include a secondary particle (core) in which primary silicon particles are assembled, and an amorphous carbon coating layer (shell) on a surface of the secondary particle. The amorphous carbon may also be between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and may also include an amorphous carbon coating layer on a surface of the core.

The Si-based negative electrode active material and/or the Sn-based negative electrode active material may be used in combination with a carbon-based negative electrode active material.

### Separator 30

Depending on the type or kind of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, for example, a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a first coating layer including an organic material, an inorganic material, and/or a (e.g., any suitable) combination thereof on a surface (e.g., one surface or both surfaces (e.g., two opposite surfaces)) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer and/or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a (e.g., any suitable) combination thereof, but embodiments of the present disclosure are not limited thereto.

In one or more embodiments, the organic material and the inorganic material may be mixed in one first coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in an electrochemical reaction of the battery.

The non-aqueous organic solvent may be a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond), and/or the like; amides such as dimethylformamide; dioxolanes such as 1,3-dioxolane, 1,4-dioxolane, and/or the like; sulfolanes; and/or the like.

The non-aqueous organic solvents may be used alone or in combination of two or more.

In one or more embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a rechargeable lithium battery, enables a basic operation of the rechargeable lithium battery, and improves transportation and migration of the lithium ions between positive electrode and the negative electrode. The lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

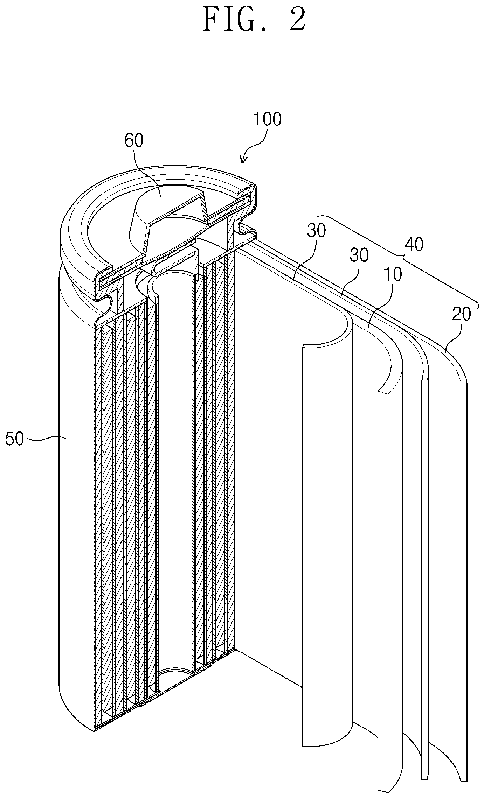

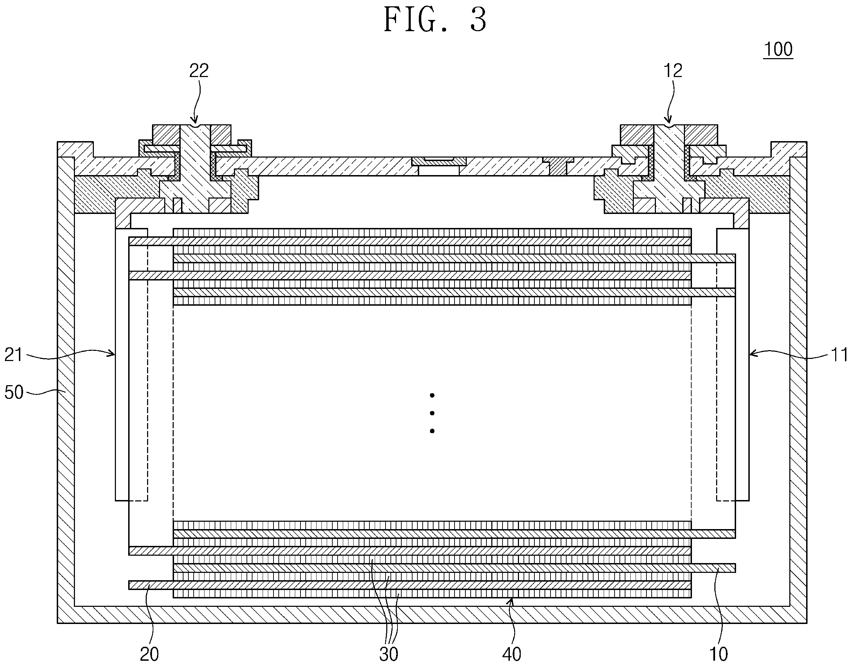

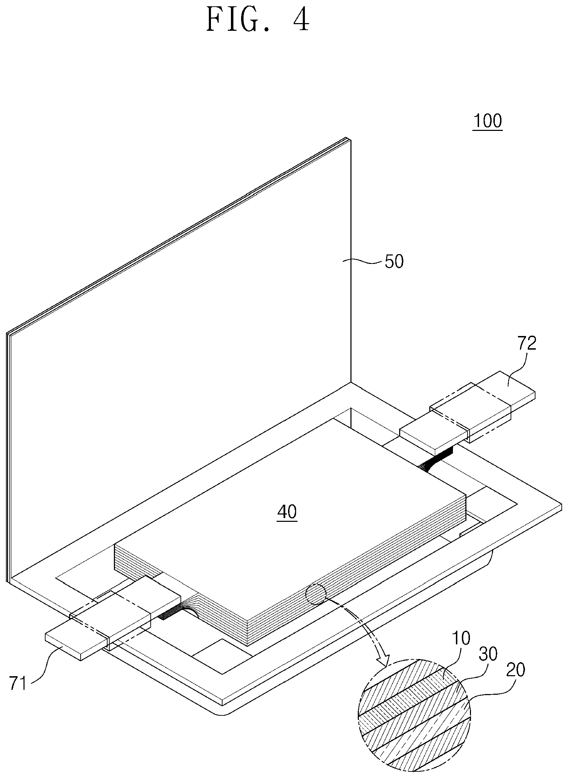

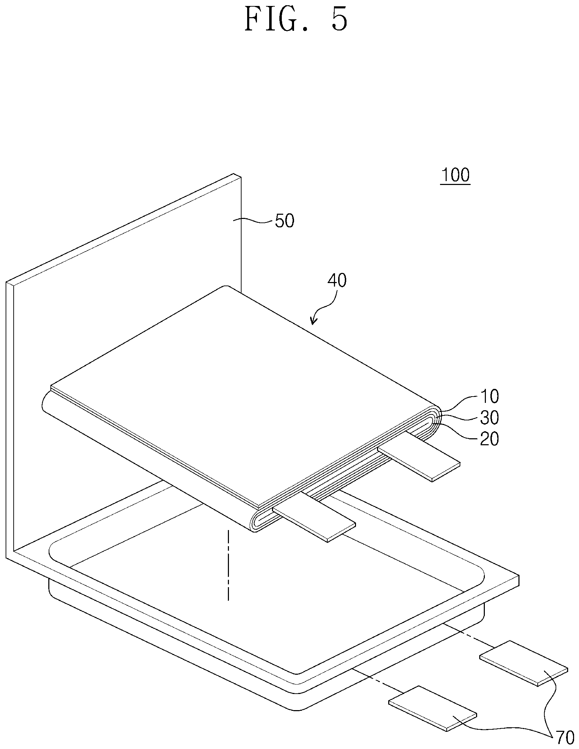

The rechargeable lithium battery may be classified into cylindrical, prismatic, pouch, or coin-type or kind batteries, and/or the like depending on their shape. FIGS. 2 to 5 are each a schematic view illustrating a rechargeable lithium battery according to one or more embodiments of the present disclosure. FIG. 2 shows a cylindrical battery, FIG. 3 shows a prismatic battery, and FIGS. 4 and 5 each show a pouch-type or kind battery. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In some embodiments, the rechargeable lithium battery 100 may include a sealing member 60 sealing the case 50, as shown in FIG. 2. In some embodiments, as shown in FIG. 3, the rechargeable lithium battery 100 may include a positive lead tab 11, a positive terminal 12, a negative lead tab 21, and a negative terminal 22. In some embodiments, as shown in each of FIGS. 4 and 5, the rechargeable lithium battery 100 may include an electrode tab 70, which may be, for example, a positive electrode tab 71 and a negative electrode tab 72, serving as an electrical path for inducing the current formed in the electrode assembly 40 to the outside.

Hereinafter, a positive electrode active material for a rechargeable lithium battery and a method of preparing the same according to one or more embodiments of the present disclosure will be described in more detail.

### Lithium Composite Oxide Preparation

First, a lithium composite oxide is prepared. A lithium composite oxide according to the present invention is represented by Chemical Formula 1:

Chemical Formula 1 Liₐ₁Niₓ₁M¹_{y1}M²_{z1}O_{2-b1}X_{b1}

In Chemical Formula 1, 0.9≤a1≤1.8, 0.7≤x1≤1, 0≤y1≤0.3, 0≤z1≤0.3, 0.9≤x1+y1+z1≤1.1, 0≤b1≤0.1, M¹ and M² are each independently at least one element selected from the group consisting of aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), strontium (Sr), titanium (Ti), vanadium (V), tungsten (W), and zirconium (Zr), and X is at least one element selected from the group consisting of fluorine (F), phosphorus (P), and sulfur (S).

In one or more embodiments, for Chemical Formula 1: 0.8≤x1≤0.99, 0.01≤y1≤0.2, and 0.01≤z1≤0.2; or 0.9≤x1≤1, 0≤y1≤0.1, and 0≤z1≤0.1.

For example, the lithium composite oxide may be a compound represented by Chemical Formula 2:

Chemical Formula 2 Liₐ₂Niₓ₂Co_{y2}M³_{z2}O_{2-b2}X_{b2}

In Chemical Formula 2, 0.9≤a2≤1.8, 0.7≤x2≤1, 0≤y2≤0.3, 0≤z2≤0.3, 0.9≤x2+y2+z2≤1.1, 0≤b2≤0.1, M³ may be at least one element selected from the group consisting of Al, B, Ba, Ca, Ce, Cr, Fe, Mg, Mn, Mo, Nb, Si, Sr, Ti, V, W, and Zr, and X may be at least one element selected from the group consisting of F, P, and S.

In one or more embodiments, for Chemical Formula 2: 0.8≤x2≤0.99, 0.01≤y2≤0.2, and 0.01≤z2≤0.2; or 0.9≤x2≤0.99, 0.01≤y2≤0.1, and 0.01≤z2≤0.1.

For example, the lithium composite oxide may be a compound represented by Chemical Formula 3. The compound of Chemical Formula 3 may be a lithium nickel-cobalt-aluminium oxide or a lithium nickel-cobalt-manganese oxide.

Chemical Formula 3 Liₐ₃Niₓ₃Co_{y3}M⁴_{z3}M⁵_{w3}O_{2-b3}X_{b3}

In Chemical Formula 3, 0.9≤a3≤1.8, 0.8≤x3≤0.98, 0.01≤y3≤0.19, 0.01≤z3≤0.19, 0≤w3≤0.19, 0.9≤x3+y3+z3+w3≤1.1, 0≤b3≤0.1, M⁴ may be at least one selected from the group consisting of Al and Mn, M⁵ may be at least one element selected from the group consisting of B, Ba, Ca, Ce, Cr, Fe, Mg, Mo, Nb, Si, Sr, Ti, V, W, and Zr, and X may be at least one element selected from the group consisting of F, P, and S.

In one or more embodiments, for Chemical Formula 3: 0.85≤x3≤0.98, 0.01≤y3≤0.14, 0.01≤z3≤0.14, and 0≤w3≤0.14, or 0.9≤x3≤0.98, 0.01≤y3≤0.09, 0.01≤z3≤0.09, and 0≤w3≤0.09.

The lithium composite oxide represented by Chemical Formula 1 may be one which is prepared by a method of mixing a transition metal precursor and a lithium-containing source and then sintering the resultant mixture. The transition metal precursor may be a hydroxide, oxyhydroxide, carbonate, or organic complex of composite transition metals containing nickel and optionally M¹ and/or M².

The transition metal precursor may be used 'as is' by purchasing a commercially available product, or may be prepared according to a method of preparing a transition metal precursor that is well-known in the art.

In one or more embodiments, the transition metal precursor may be obtained through a co-precipitation method. For example, the co-precipitation method may include dissolving transition metal sources in a solvent, such as distilled water, and continuously adding a transition metal salt solution into a reactor together with a chelating agent and a basic aqueous solution to cause precipitation. After collecting a precipitate in a form of a slurry, a slurry solution may be filtered and dried to obtain a transition metal precursor.

In the present disclosure, the transition metal source includes, in addition to nickel (Ni), a metal salt of at least one element selected from the group consisting of, Co, Al, Mn, sodium (Na), Mg, Ca, yttrium (Y), Ti, hafnium (Hf), V, Nb, tantalum (Ta), Cr, Mo, W, Fe, Cu, silver (Ag), zinc (Zn), B, gallium (Ga), carbon (C), Si, and tin (Sn). A sulfate, nitrate, acetate, halide, and/or hydroxide may be used as the metal salt, and the metal salt is not particularly limited as long as it may be dissolved in the solvent. The transition metal source according to one or more embodiments may include a nickel salt, a cobalt salt, and/or an aluminium salt. The transition metal sources may be mixed by adjusting a molar ratio to allow a positive electrode active material to have high capacity characteristics. For example, the value of the variable "x1" of Chemical Formula 1 may be set or determined by the molar ratio.

The transition metal precursor and a lithium source may be mixed at a set or predetermined ratio to form a mixture. For example, the transition metal precursor and the lithium source may be mixed at a molar ratio of about 1:1. The lithium source is not particularly limited as long as it is a material typically used during preparation of a positive electrode active material. For example, the lithium source may include a lithium salt such as lithium carbonate, lithium nitrate, lithium hydroxide, and/or lithium sulfate.

The mixture may be added to a furnace and a sintering process may be performed. The temperature of the sintering process may be in a range of about 700°C to about 1,000°C. For example, the temperature of the sintering process may be in a range of about 900°C to about 1,000°C. The sintering process may be performed in an oxidation atmosphere such as air or oxygen. The heat treatment time of the sintering process may be in a range of about 10 hours to about 30 hours. In one or more embodiments of disclosure, preliminary sintering may be additionally performed at a temperature of about 150°C to about 800°C before the sintering process.

A lithium composite oxide may be formed from the mixture including the transition metal precursor and the lithium source through the sintering process. A grinding process may be performed on the synthesized lithium composite oxide.

### Wet Coating the Lithium Composite Oxide

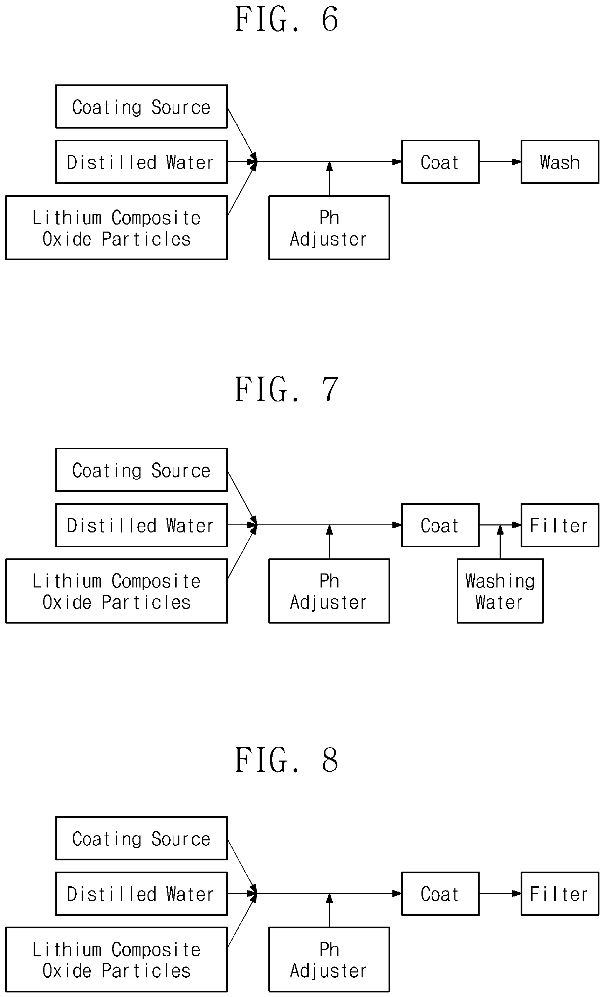

Referring to FIG. 6, a coating process is performed on the lithium composite oxide. For example, lithium composite oxide particles and a coating source may be added to a solvent (e.g., distilled water) and mixed with the solvent. For example, in a wet coating process, primary washing and coating may be concurrently (e.g., simultaneously) performed on the lithium composite oxide particles.

As the coating source, oxide, hydroxide, oxyhydroxide, carbonate, sulfate, halide, sulfide, acetic acid salt, and/or carboxylate, are non-limiting examples which may be included as an element to be applied. In addition to Ni, for example, at least one further element (hereinafter, collectively referred to as a 'coating element' or 'coating elements') selected from the group consisting of Al, Ti, W, B, F, P, Mg, Co, Fe, Cr, V, Cu, Ca, Zn, Zr, Nb. Mo, Sr, antimony (Sb), bismuth (Bi), Si, and S, and/or a (e.g., any suitable) combination thereof may be used, but the coating source is not limited thereto.

For example, the coating source additionally may be cobalt hydroxide, cobalt carbonate, cobalt sulfate, cobalt oxide, cobalt nitrate, aluminium hydroxide, aluminium chloride, aluminium oxide, manganese hydroxide, manganese oxide, manganese salt, manganese chloride, and/or a (e.g., any suitable) combination thereof, but the present disclosure is not limited thereto.

In the coating process, a precipitant, a pH adjuster, and/or the like may be further added, if (e.g., when) necessary. For example, a basic material (e.g., NaOH) may be used as the precipitant or the pH adjuster.

### Additional Cleaning the Lithium Composite Oxide

Referring to FIGS. 6 through 8, in order to remove a lithium by-product present on a surface of the lithium composite oxide (e.g., coated lithium composite oxide) after the coating process, a process of washing the coated lithium composite oxide is further performed.

With respect to a lithium composite oxide containing a high concentration of nickel, because it is structurally unstable in comparison to a lithium composite oxide with a low nickel content (e.g., amount), more lithium by-products, such as unreacted lithium hydroxide or lithium carbonate, are generated during a preparation process. In a case in which a large amount of residual lithium is present in the positive electrode active material, the residual lithium may react with an electrolyte solution to cause gas generation and a swelling phenomenon, and, as a result, high-temperature stability may be (e.g., significantly) reduced. Thus, it is common for an additional cleaning process to be performed after the coating process to remove the residual lithium from the lithium composite oxide (e.g., containing a high concentration of nickel).

The cleaning, for example, may be performed by a method of adding the coated lithium composite oxide to ultrapure water and stirring them together. As another example, the cleaning may be performed by a method of filtering the lithium composite oxide from the solvent used in the coating and concurrently (e.g., simultaneously) adding washing water (see FIG. 7).

An amount of the washing water used in the washing process according to one or more embodiments of the present disclosure may be in a range of about 0 wt% to about 15 wt% based on a total weight of the coated lithium composite oxide, and, for example, may be in a range of about 0 wt% to about 10 wt%, about 3 wt% to about 10 wt%, or about 3 wt% to about 5 wt%. Referring to FIG. 8, a case where the amount of the washing water used is 0% based on the total weight of the coated lithium composite oxide refers to a case where no additional washing process is performed after the coating process.

If (e.g., when) the amount of the washing water satisfies the disclosed ranges, the lithium by-product may be effectively removed while minimizing or reducing surface damage to the lithium composite oxide. According to one or more embodiments of the present disclosure, a significant amount of the lithium by-product may be removed by using the pH adjuster in the herein-described coating process. Thus, even if (e.g., when) the washing is omitted or the washing process is performed with a trace amount of the washing water, the lithium by-product on the lithium composite oxide may be sufficiently removed.

The washing process according to one or more embodiments of the present disclosure may be performed for about 30 minutes to about 60 minutes, for example, about 30 minutes to about 50 minutes, or about 30 minutes to about 40 minutes. In this case, washing temperature may be in a range of about 25°C to about 30°C.

After the cleaning, filtering and surface treating the lithium composite oxide may be further performed. The surface treating may include performing a heat treatment process in an oxidizing atmosphere such as air or oxygen. The surface treating may be performed at a temperature of about 500°C to about 900°C.

### Positive Electrode Active Material

Hereinafter, the positive electrode active material of the present disclosure will be described in more detail.

The positive electrode active material according to the present invention includes the lithium composite oxide represented by the herein-described Chemical Formula 1, and optionally represented by the herein-described Chemical Formulae 2 or 3. Also, as described herein, the positive electrode active material according to one or more embodiments of the present disclosure may include the lithium composite oxide containing a high content (e.g., amount) of nickel.

The positive electrode active material according to the present invention includes sodium (Na) and sulfur (S). The Na and S may be derived from a wet coating process, and particularly, the S may be derived from a metal sulfate. In one or more embodiments, the Na may be derived from a pH adjuster.

A weight ratio of the Na to a total weight of the lithium composite oxide particles may be in a range of about 200 parts per million (ppm) to about 600 ppm, and a mass ratio of S particles to the total weight of the lithium composite oxide particles may be in a range of about 300 ppm to about 800 ppm. A mass fraction (S/Na) of the sulfur (S) to the sodium (Na) is in a range of about 1 to about 5, for example, about 1 to about 3, or about 1.5 to about 3.

The term "mass fraction" as used herein may be obtained as a result of analyzing an impurity content (e.g., amount) in the positive electrode active material using an inductively coupled plasma (ICP) emission spectrometer, that is, an inductively coupled plasma-mass spectrometer (ICP-MS).

The positive electrode active material according to one or more embodiments of the present disclosure may have an amount of the residual lithium present on the surface of at most about 2,000 ppm (e.g., or less), for example, about 1,800 ppm or less. In a case in which the amount of the lithium by-product present on the surface of the positive electrode active material is greater than the disclosed ranges, a reaction between the lithium by-product and a lithium salt present in the electrolyte solution continuously occurs to generate oxygen, hydrogen fluoride (HF), water (H₂O), and other gases, and, as a result, it may have an adverse effect on performance of the rechargeable lithium battery. The amount of the residual lithium present on the surface of the positive electrode active material may be evaluated by measuring a lithium (Li) content (e.g., amount) in LiCO₃ and LiOH, which remain on the surface of the positive electrode active material, by a wet method (or titration method).

The positive electrode active material according to the present invention includes a coating layer on one or more surfaces of the lithium composite oxide, for example the particles thereof. The coating layer may include a cobalt-containing compound, an aluminium-containing compound, or a manganese-containing compound. For example, the coating layer may include cobalt oxide, cobalt hydroxide, cobalt carbonate, aluminium hydroxide, aluminium chloride, manganese oxide, and/or a (e.g., any suitable) combination thereof, but the present disclosure is not limited thereto.

The rechargeable lithium battery according to one or more embodiments of the present disclosure may be applied to automobiles, mobile phones, and/or one or more suitable types (kinds) of electric devices, as non-limiting examples.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

The following Examples and Comparative Examples are provided in order to highlight characteristics of one or more embodiments, but it will be understood that the Examples and Comparative Examples are not to be construed as limiting the scope of one or more embodiments. Further, it will be understood that one or more embodiments are not limited to the particular details described in the Examples and Comparative Examples.

### EXAMPLES

### Preparation of Positive Electrode Active Material

### Preparation Example 1

### Lithium Composite Oxide Preparation

As metal sources, nickel sulfate hexahydrate (NiSO₄•6H₂O), cobalt sulfate septahydrate (CoSO₄•7H₂O), and manganese sulfate monohydrate (MnSO₄•H₂O) were dissolved in distilled water, as a solvent, in a molar ratio of about 95:4:1 to prepare a mixed solution, and ammonia water (NH₄OH) and sodium hydroxide (NaOH), as a precipitant, were prepared to form a complex.

After adding a diluted ammonia water solution to a continuous reactor, the metal source mixed solution was continuously added, and sodium hydroxide was added to maintain a suitable pH in the reactor. A reaction proceeded slowly for approximately 80 hours, and, when the reaction was stabilized, a precipitated product was collected, washed, and dried to obtain a final precursor. Accordingly, the transition metal precursor (Ni_{0.95}Co_{0.04}Mn_{0.01}(OH)₂) was obtained, washed, and dried.

The transition metal precursor and LiOH were mixed such that a molar ratio of lithium to a total amount of metals in the transition metal precursor was about 1.04, and a first heat treatment was performed at about 750°C for about 15 hours in an oxygen atmosphere to prepare a lithium composite oxide (LiNi_{0.95}Co_{0.04}Mn_{0.01}O₂). An average particle diameter of the obtained lithium composite oxide was approximately 15 micrometers (µm).

### Lithium Composite Oxide Coating and Primary Cleaning

A wet coating process was performed in which a solvent and cobalt sulfate were added to distilled water and the prepared lithium composite oxide was added and mixed. Primary cleaning of the lithium composite oxide was performed in the wet coating process. The cobalt sulfate was added such that an amount of cobalt based on total elements excluding lithium and oxygen in the lithium composite oxide was about 2.5 mol%. Sodium hydroxide was additionally added as a pH adjuster during the coating process.

### Lithium Composite Oxide Filtration

A process of filtering lithium composite oxide particles from the mixed solution was performed. Additional washing water was not added. The filtering process was performed at about 25°C for about 60 minutes. The filtered lithium composite oxide particles were dried at about 150°C for about 12 hours and were subjected to a heat treatment (i.e., surface treatment) at about 850°C for about 15 hours in an oxygen atmosphere.

Inductively Coupled Plasma (ICP) analysis results of the prepared positive electrode active material particles and results of evaluating an amount of residual lithium are presented in Table 1. The amount of the residual lithium was evaluated by measuring a Li content (e.g., amount) in LiCO₃ and LiOH, which remained on a surface of the positive electrode active material, by a wet method (or titration method).

In other words, the preparation of the positive electrode active material began with dissolving nickel sulfate hexahydrate, cobalt sulfate septahydrate, and manganese sulfate monohydrate in distilled water to create a mixed solution in a molar ratio of 95:4:1. Ammonia water and sodium hydroxide were then added to this solution in a continuous reactor to form a complex. The reaction proceeded over 80 hours, after which the product was collected, washed, and dried to obtain a transition metal precursor with the formula Ni_{0.95}Co_{0.04}Mn_{0.01}(OH)₂.

Next, the transition metal precursor was mixed with LiOH in a molar ratio of 1.04:1 (lithium to total metals) and subjected to a first heat treatment at 750°C for 15 hours in an oxygen atmosphere, resulting in the formation of a lithium composite oxide (LiNi_{0.95}Co_{0.04}Mn_{0.01}O₂). This lithium composite oxide, with an average particle diameter of 15 micrometers, underwent a wet coating process where it was mixed with cobalt sulfate and sodium hydroxide in distilled water. The cobalt sulfate was added to achieve a cobalt content of 2.5 mol% relative to the total elements, excluding lithium and oxygen.

Finally, the lithium composite oxide particles were filtered from the mixed solution without additional washing water, dried at 150°C for 12 hours, and then subjected to a surface treatment at 850°C for 15 hours in an oxygen atmosphere. The prepared positive electrode active material was analyzed using Inductively Coupled Plasma (ICP) to determine the amount of residual lithium, which was measured by evaluating the lithium content in LiCO₃ and LiOH remaining on the surface of the material. The results of this analysis were presented in Table 1.

### Preparation Example 2

A positive electrode active material was prepared in substantially the same manner as in Preparation Example 1 except that the filtering process was performed for about 30 minutes. ICP analysis results of the prepared positive electrode active material particles and results of evaluating an amount of residual lithium are presented in Table 1.

### Preparation Example 3

A positive electrode active material was prepared in substantially the same manner as in Preparation Example 1 except that, in the filtering process, additional cleaning was performed by adding washing water such that an amount of the washing water based on a total weight of the lithium composite oxide particles was about 10 wt%. ICP analysis results of the prepared positive electrode active material particles and results of evaluating an amount of residual lithium are presented in Table 1.

### Comparative Preparation Example 1

A positive electrode active material was prepared in substantially the same manner as in Preparation Example 1 except that the pH adjuster was omitted in the coating process. ICP analysis results of the prepared positive electrode active material particles and results of evaluating an amount of residual lithium are presented in Table 1.

### Comparative Preparation Example 2

A positive electrode active material was prepared in substantially the same manner as in Preparation Example 1 except that, in the filtering process, additional cleaning was performed by adding washing water such that an amount of the washing water based on a total weight of the lithium composite oxide particles was about 20 wt%. ICP analysis results of the prepared positive electrode active material particles and results of evaluating an amount of residual lithium are presented in Table 1.

**Table 1**

| Analysis | | Preparati on | Preparati on | Preparati on | Comparat ive | Comparat ive |
|---|---|---|---|---|---|---|
| | | Example 1 | Example 2 | Example 3 | Preparati on Example 1 | Preparati on Example 2 |
| ICP | Na(ppm) | 218 | 236 | 202 | 15 | 22 |
| | S(ppm) | 339 | 350 | 317 | 430 | 121 |
| | S/Na | 1.55 | 1.48 | 1.60 | 28.67 | 5.50 |
| Residual lithium | Li(ppm) | 1380 | 1496 | 1170 | 1898 | 835 |

Referring to Table 1, as illustrated in Preparation Examples 1 to 3, it may be confirmed that a mass fraction (e.g., ratio) (S/Na) of S to Na was decreased when the cleaning process was excluded after the coating process or the amount of the washing water was limited. Also, it may be confirmed that the amount of the residual lithium was detected at about at most 1,500 parts per million (ppm) (e.g., or less) even if the amount of the washing water was limited.

### Fabrication of Rechargeable Lithium Battery

### Example 1

About 95 g of the positive electrode active material of Preparation Example 1, about 3 wt% of a polyvinylidene fluoride binder, and about 2 wt% of a carbon nanotube conductive material were mixed in an N-methyl pyrrolidone solvent to prepare a positive electrode active material slurry. The positive electrode active material slurry was applied onto an aluminium current collector, dried, and then rolled to prepare a positive electrode.

The prepared positive electrode and a lithium metal counter electrode were used, a polyethylene-polypropylene multilayer-structured separator was arranged therebetween, and a coin half-cell was fabricated by injecting an electrolyte solution in which 1.0 M LiPF₆, a lithium salt, was added to a solvent in which ethylene carbonate (EC) and diethyl carbonate (DEC) were mixed in a volume ratio of about 50:50.

### Example 2

A rechargeable lithium battery was fabricated in substantially the same manner as in Example 1 except the positive electrode active material of Preparation Example 2 was used as a positive electrode active material.

### Example 3

A rechargeable lithium battery was fabricated in substantially the same manner as in Example 1 except the positive electrode active material of Preparation Example 3 was used as a positive electrode active material.

### Comparative Example 1

A rechargeable lithium battery was fabricated in substantially the same manner as in Example 1 except the positive electrode active material of Comparative Preparation Example 1 was used as a positive electrode active material.

### Comparative Example 2

A rechargeable lithium battery was fabricated in substantially the same manner as in Example 1 except the positive electrode active material of Comparative Preparation Example 2 was used as a positive electrode active material.

### Evaluation Example 1: Charge/Discharge Efficiency and Lifetime

### Characteristics

### Charge/Discharge Efficiency

Each of the coin half-cells of Examples 1 2, and 3 and Comparative Examples 1 and 2 was charged under constant current (0.2 C) and constant voltage (4.25 V, 0.05 C cut-off) conditions to measure charge capacity, was rested for about 10 minutes, and was discharged to about 3.0 V under a constant current (0.2 C) condition to measure discharge capacity. A ratio of the discharge capacity to the charge capacity is expressed as efficiency. The results thereof are presented in Table 2.

### Lifetime Characteristics

After initial charge and discharge, charge and discharge were repeated about 60 times at about 1C and about 25°C to measure 60^{th} discharge capacity, and a ratio (%) of the 60^{th} discharge capacity to the initial discharge capacity was determined as room-temperature capacity retention, that is, room-temperature lifetime characteristics and presented in Table 2.

**Table 2**

| Category | Charge capacity (mAh/g) | Discharge capacity (mAh/g) | Efficiency (%) | Room-temperature lifetime |
|---|---|---|---|---|
| | | | | 60 ^{th} cyc |
| Example 1 | 244.3 | 213.9 | 87.5% | 98.2 |
| Example 2 | 242.2 | 213.2 | 88.0% | 98.5 |
| Example 3 | 242.3 | 213.1 | 87.9% | 98.4 |
| Comparative Example 1 | 242.7 | 218.2 | 89.9% | 95.3 |
| Comparative Example 2 | 244.8 | 214.5 | 87.6% | 95.1 |

Referring to Table 2, when comparing cases (Examples 1 to 3) of excluding the cleaning process after the coating process or using a limited amount of the washing water and time with a case (Comparative Example 2) of using a large amount of the washing water, it may be confirmed that there was no significant difference in charge/discharge capacity and efficiency, but room-temperature lifetime characteristics were improved. Also, when NaOH was not used (Comparative Example 1), it may be confirmed that, because a surface portion was not coated, capacity was improved, but lifetime was rapidly reduced.

According to one or more embodiments of the present disclosure, in the process of preparing a positive electrode active material, the amount of the washing water used in the cleaning process after the wet coating may be limited. Excessive cleaning may be prevented or reduced and damage to the surface of the positive electrode active material may be minimized or reduced by limiting the amount of the washing water. In other words, according to the present disclosure, the amount of washing water used in the cleaning process after the wet coating of the positive electrode active material can be limited. By controlling the washing water, excessive cleaning is prevented, and surface damage to the positive electrode active material is minimized.

A rechargeable lithium battery using the positive electrode active material of the present disclosure may exhibit improved lifetime characteristics.

A battery manufacturing device, a management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

Although one or more embodiments of the present disclosure have been described herein, the scope of the present disclosure is not limited to one or more embodiments. One or more suitable modifications of one or more embodiments may be made without departing from the scope of disclosure as defined by the appended claims, and equivalents thereof, and the modifications are included in the scope of the present disclosure.

### Reference Numerals

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A method of preparing a positive electrode active material comprising:
preparing a lithium composite oxide represented by Chemical Formula 1;
wet coating the lithium composite oxide to provide a coated lithium composite oxide; and
cleaning the coated lithium composite oxide utilizing a washing water to provide a cleaned lithium composite oxide:
Chemical Formula 1 Liₐ₁Niₓ₁M¹_{y1}M²_{z1}O_{2-b1}X_{b1},
wherein, in Chemical Formula 1,
0.9≤a1≤1.8,
0.7≤x1≤1,
0≤y1≤0.3,
0≤z1≤0.3,
0.9≤x1+y1+z1≤1.1,
0≤b1≤0.1,
M¹ and M² each independently comprise at least one element selected from the group consisting of aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), strontium (Sr), titanium (Ti), vanadium (V), tungsten (W), and zirconium (Zr), and
X comprises at least one element selected from the group consisting of fluorine (F), phosphorus (P), and sulfur (S), and
Wherein: (i) an amount of the washing water is at most about 15 wt% based on a total weight of the coated lithium composite oxide, and/or (ii) the positive electrode active material comprises sodium (Na) and sulfur (S), and a mass fraction (S/Na) of sulfur (S) to sodium (Na) is about 1 to about 3.

2. The method as claimed in claim 1, wherein the cleaning is performed for about 30 minutes to about 60 minutes.

3. The method as claimed in claim 1 or claim 2, wherein the wet coating comprises adding the lithium composite oxide and a coating source to a solvent and mixing the lithium composite oxide and the coating source with the solvent.

4. The method as claimed in claim 3, wherein the wet coating further comprises adding a basic material.

5. The method as claimed in claim 3 or claim 4, wherein the coating source comprises at least one selected from the group consisting of a cobalt precursor, an aluminium precursor, and a zirconium precursor.

6. The method as claimed in any preceding claim, further comprising filtering the cleaned lithium composite oxide.

7. A positive electrode active material comprising:
a lithium composite oxide represented by Chemical Formula 1; and
a coating layer on a surface of the lithium composite oxide, wherein,
the positive electrode active material further comprises sodium (Na) and sulfur (S), and a mass fraction (S/Na) of sulfur (S) to sodium (Na) is in a range of about 1 to about 3:
Chemical Formula 1 Liₐ₁Niₓ₁M¹_{y1}M²_{z1}O_{2-b1}X_{b1}, and
wherein, in Chemical Formula 1,
0.9≤a1≤1.8,
0.7≤x1≤1,
0≤y1≤0.3,
0≤z1≤0.3,
0.9≤x1+y1+z1 ≤1.1,
0≤b1≤0.1,
M¹ and M² each independently comprise at least one element selected from the group consisting of aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), strontium (Sr), titanium (Ti), vanadium (V), tungsten (W), and zirconium (Zr), and
X comprises at least one element selected from the group consisting of fluorine (F), phosphorus (P), and sulfur (S).

8. The positive electrode active material as claimed in claim 7, wherein x1 is about 0.8 to about 0.99.

9. The positive electrode active material as claimed in claim 7 or claim 8, wherein the lithium composite oxide has a layered crystal structure.

10. The positive electrode active material as claimed in any one of claims 7 to 9, wherein an amount of residual lithium on a surface of the positive electrode active material is at most about 2,000 parts per million (ppm).

11. The positive electrode active material as claimed in any one of claims 7 to 10, wherein the coating layer comprises at least one element selected from the group consisting of Al, Ti, W, B, F, P, Mg, nickel (Ni), Co, Fe, Cr, V, Cu, Ca, zinc (Zn), Zr, Nb, Mo, Sr, antimony (Sb), bismuth (Bi), Si, and S.

12. The positive electrode active material as claimed in any one of claims 7 to 11, wherein the positive electrode active material is prepared by a method comprising:
preparing the lithium composite oxide represented by Chemical Formula 1;
wet coating the lithium composite oxide to provide a coated lithium composite oxide; and
cleaning the coated lithium composite oxide utilizing a washing water,
wherein an amount of the washing water is at most about 15 wt% based on a total weight of the coated lithium composite oxide.

13. The positive electrode active material as claimed in any one of claims 7 to 12, wherein the positive electrode active material is prepared by a method comprising:
preparing the lithium composite oxide represented by Chemical Formula 1;
wet coating the lithium composite oxide to provide a coated lithium composite oxide; and
cleaning the coated lithium composite oxide utilizing a washing water, and
wherein,
the positive electrode active material comprises sodium (Na) and sulfur (S), and a mass fraction (S/Na) of sulfur (S) to sodium (Na) is about 1 to about 3.
